# EUROPÄISCHE PATENTSCHRIFT

(11) **EP 1 875 088 B1**
(45) Veröffentlichungstag und Bekanntmachung des Hinweises auf die Patenterteilung: **03.06.2009**
(21) Anmeldenummer: 06742252.7
(22) Anmeldetag: 19.04.2006
(51) Int. Cl.: F16C 19/18, F16C 43/04, F16C 35/063, B60B 27/00

(54) **NABE EINER RADLAGEREINHEIT**
HUB FOR A WHEEL BEARING UNIT
MOYEU D'UNE UNITE ROULEMENT DE ROUE

(30) Priorität: 28.04.2005 DE 102005019731
(43) Veröffentlichungstag der Anmeldung: 09.01.2008
(73) Patentinhaber: Schaeffler KG, 97421 Schweinfurt (DE)
(72) Erfinder: LANGER, Roland, 97523 Schwanfeld (DE); MASUR, Ernst, 97508 Untereuerheim (DE); HEISS, Ralf, 97421 Schweinfurt (DE); FÜLLER, Benno, 97753 Karlstadt (DE); NIEBLING, Peter, 97688 Bad Kissingen (DE)
(86) Internationale Anmeldenummer: PCT/DE2006/000676
(87) Internationale Veröffentlichungsnummer: WO 2006/114083

(56) Entgegenhaltungen:
- DE-A1- 3 636 243
- DE-A1- 19 637 940
- DE-C1- 3 116 720
- GB-A- 2 122 724
- US-A- 6 146 022
- PATENT ABSTRACTS OF JAPAN Bd. 1997, Nr. 10, 31. Oktober 1997 (1997-10-31) -& JP 09 164803 A (NIPPON SEIKO KK), 24. Juni 1997 (1997-06-24)
- PATENT ABSTRACTS OF JAPAN Bd. 2000, Nr. 16, 8. Mai 2001 (2001-05-08) -& JP 2001 001710 A (NTN CORP), 9. Januar 2001 (2001-01-09)

## Beschreibung

### Gebiet der Erfindung

Die Erfindung betrifft eine Nabe einer Radlagereinheit mit zumindest einem auf der Nabe sitzenden Innenring, wobei der Innenring durch einen aus der Nabe umgeformten Bund axial auf der Nabe gehalten ist und dabei der Bund eine Verzahnung aufweist und wobei der Innenring stirnseitig radial innen eine Ausbrechung aufweist und dabei die Ausbrechung mit plastisch verdrängtem Material des Bundes so ausgefüllt ist, dass das Material den Innenring zumindest in der Ausbrechung hintergreift und dass das Material in der Ausbrechung in radialer Richtung von dem Innenring eingefasst ist.

### Hintergrund der Erfindung

Eine derartige Nabe ist in DE 36 36 243 A1 beschrieben. Der Innenring wird von einem einstückig mit der Nabe ausgebildeten Bund auf der Nabe gehalten. Der Bund wird aus einem axialen Endabschnitt der Nabe geformt. Der Innenring wird dazu auf seinen Sitz aufgeschoben und dann wird der Endabschnitt aufgeweitet, umgelegt und mit der Verzahnung versehen. Die Technologie ist vorzugsweise Kaltumformen. Das Material des Bundes wird dabei in die stirnseitige Ausbrechung eingedrückt. Es ist eine drehfeste Verbindung zwischen dem Innenring und der Nabe hergestellt. Die Radlagerung ist über den axial gegen den Innenring vorgespannten Bund verspannt.

Das Material des Bundes ist insbesondere beim Einbringen der Verzahnung bestrebt, radial nach außen auszuweichen. Deshalb ist zusätzlich zu dem Formwerkzeug ein hülsenförmiges Hilfswerkzeug eingesetzt, das radial außen einen Anschlag bildet und so das Wegfließen des Materials verhindert.

### Zusammenfassung der Erfindung

Die Aufgabe der Erfindung ist es, eine Nabe zu schaffen, die sich einfach und kostengünstig herstellen lässt.

Diese Aufgabe ist nach den Merkmalen des Anspruchs 1, dadurch gelöst, dass die Verzahnung zumindest anteilig in dem von dem Innenring radial in der Ausbrechung eingefassten Material ausgebildet ist. Die Verzahnung wird somit in den Anteil des Materials geformt, der radial durch den Innenring gefesselt gehalten ist. Das Material kann beim Formen der Verzahnung nicht radial ausweichen, da es vom Innenring zurückgehalten wird, und fließt vornehmlich in die Formen des Werkzeugs, so dass die Zähne, insbesondere der tragende Anteil dieser, optimal ausgeformt ist.

Unter dem Begriff Verzahnung sind alle Profile mit axialen Vorsprüngen und dazu benachbarten Lücken zwischen den Vorsprüngen zu verstehen, mit denen sich mit einem korrespondierenden Gegenprofil eine formschlüssige Drehmomente übertragende Verbindung herstellen lässt.

Derartige Profile sind zum Beispiel Stirn- oder Schrägverzahnungen aus Stahl, Nichteisenmetallen und Legierungen oder aus anderen geeigneten Werkstoffen.

Ausgestaltungen der Erfindung betreffen die Ausbildung der Verzahnung an dem Bund und sind nachfolgend anhand der Zeichnungen näher beschrieben.

### Beschreibung der Zeichnungen

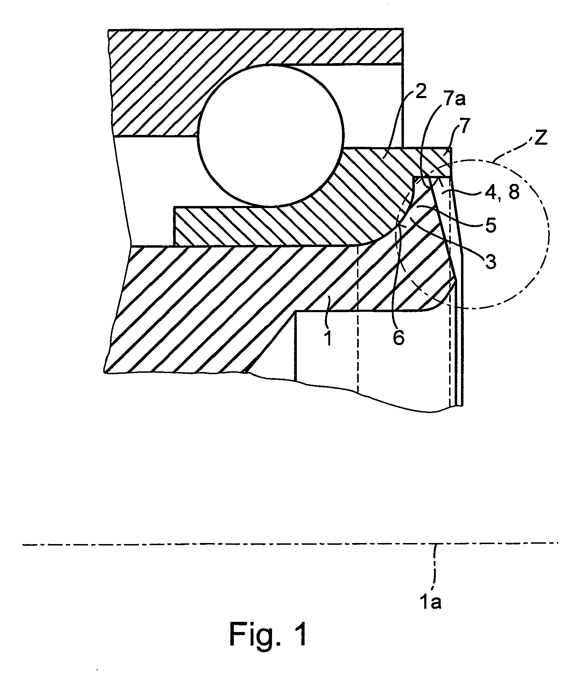

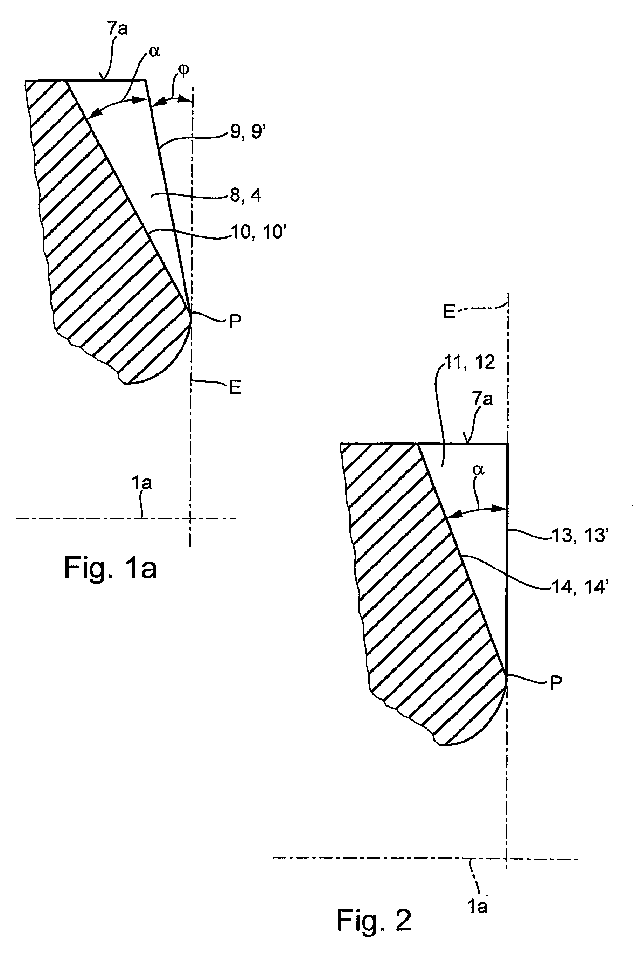

Figur 1 zeigt eine Teilansicht einer Nabe 1 einer teilweise dargestellten Radlagereinheit mit zumindest einem auf der Nabe 1 sitzenden Innenring 2. Die Anordnung ist in einem Längsschnitt entlang der Rotationsachse 1 a der Nabe 1 dargestellt. Der Innenring 2 ist durch einen aus der Nabe 1 umgeformten Bund 3 axial auf der Nabe 1 gehalten. Der Bund 3 weist eine Verzahnung 4 für eine Drehmomentverbindung auf.

Der Innenring 2 ist radial innen mit einer stirnseitigen Ausbrechung 5 versehen, die teilweise mit kalt plastisch verdrängtem Material des Bundes 3 ausgefüllt ist. Die Ausbrechung 5 verläuft ringnutförmig und das Material in der Ausbrechung 5 verläuft wulstförmig um die Rotationsachse 1a der Nabe 1. Das Material hintergreift den Innenring 2 an der Stirnfläche 6 der Ausbrechung 5. Die Stirnfläche 6 ist nach außen gewölbt. Der Innenring 2 weist einen Radialbord 7 auf, der die Ausbrechung 5 mit einer innenzylindrischen Mantelfläche 7a radial begrenzt und das Material in der Ausbrechung 5 in radiale Richtung einfasst. Die Zähne 8 der Verzahnung 4 sind anteilig in dem von dem Radialbord 7 eingefassten Material ausgebildet.

Figur 1a zeigt das Detail Z aus Figur 1 nicht maßstäblich vergrößert. Die Zähne 8 sind radial längs ausgerichtet und umfangsseitig um die Rotationsachse 1a zueinander benachbart. Die vom Zahnfuß 10 entfernte äußerste Kontur entlang der Kopfes 9 jedes der Zähne 8 ist geometrisch durch Zahnkopflinien 9' beschrieben. Die Zahnfußlinie 10' ist die geometrische Linie am Übergang des Zahnes 8 in das Material und markiert gleichzeitig den Scheitel 10 am Grund der Zahnlücke. Am Scheitelpunkt P trifft die jeweilige Zahnkopflinie 9' auf eine Zahnfußlinie 10'.

An der Verzahnung 4 nach Figur 1 und Figur 1a schließen die Zahnfußlinien 10' und die Zahnkopflinien 9' einen mit α bezeichneten spitzen Winkel beliebig wählbare Größe zwischen sich ein. Die Zahnkopflinie 9' des jeweiligen Zahnes ist außerdem mit gleichem Richtungssinn wie die Zahnfußlinie 10' um einen spitzen Winkel ϕ von beliebig wählbarer Größe von der Ebene E weg zum Material des Bundes hin geneigt. Die Ebene E ist eine gedachte durch den Scheitelpunkt P verlaufenden Vertikalebene E, die senkrecht von der Rotationsachse 1a der Nabe durchstoßen ist. Die Ebene E verläuft in diesem Fall außerhalb der Verzahnung 4. Die Zahnkopflinien 9' und die Zahnfußlinien 10' entfernen sich mit zunehmenden radialen Abstand von P und mit zunehmenden radialen Abstand von der Rotationsachse 1a der Nabe 1 zunehmend weiter voneinander.

Figur 2 zeigt das Detail Z mit einer Verzahnung 11, bei der die Zahnkopflinien 13' der Zähne 12 in der Vertikalebene E verlaufen. Die Zähne 12 sind radial längs ausgerichtet und umfangsseitig zueinander benachbart. Die vom Zahnfuß 14 entfernte äußerste Kontur entlang des Kopfes 13 jedes der Zähne 12 ist theoretisch geometrisch durch eine Zahnkopflinie 13' beschrieben. Die Zahnfußlinie 14' ist die geometrische Linie am Übergang des Zahnes 12 in das Material und markiert gleichzeitig den Scheitel 14 am Grund der Zahnlücke. An der Verzahnung 11 nach Figur 2 schließen die Zahnfußlinien 14' und die Zahnkopflinien 13' einen spitzen Winkel α beliebiger Größe zwischen sich ein, so dass die jeweilige Zahnfußlinie 14' um den Winkel α von der Vertikalebene E weg zum Material des Bordes hin geneigt ist. Die Ebene E begrenzt in diesem Fall die Verzahnung 11 kopfseitig. Die Zahnkopflinien 13' und die Zahnfußlinien 14' entfernen sich mit zunehmenden radialen Abstand von P und mit zunehmenden radialen Abstand von der Rotationsachse 1 a der Nabe 1 zunehmend weiter voneinander.

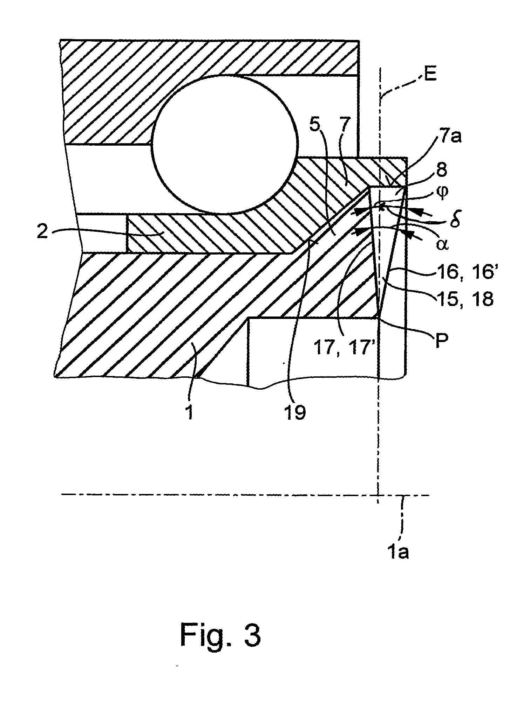

Figur 3 zeigt eine Teilansicht einer Nabe 1 einer teilweise dargestellten Radlagereinheit mit zumindest einem auf der Nabe 1 sitzenden Innenring 2. Die Anordnung ist in einem Längsschnitt entlang der Rotationsachse 1a der Nabe 1 dargestellt. In der Ausbrechung 5 ist eine schräg verlaufende plane Stirnfläche 19 von dem Material mit einer Verzahnung 15 hintergriffen. Die Zähne 18 sind radial längs ausgerichtet und umfangsseitig zueinander benachbart. Die Verzahnung 15 ist von dem Bord 7 des Innenrings radial vollständig umgriffen, so dass die Verzahnung 15 vollständig in dem Material ausgebildet ist, das beim Formen des Bundes in die Ausbrechung 5 gepresst wurde.

Die vom Zahnfuß 17 entfernte äußerste Kontur entlang des Kopfes 16 jedes der Zähne 18 ist theoretisch geometrisch durch die Zahnkopflinie 16' beschrieben. Die Zahnfußlinie 17' ist die geometrische Linie am Übergang des jeweiligen Zahnes 18 in das Material und markiert gleichzeitig den Scheitel 17 am Grund der Zahnlücke. Die Zahnfußlinien 17' und die Zahnkopflinien 16' schließen einen spitzen Winkel α beliebiger Größe zwischen sich ein.

Die Vertikalebene E verläuft in der Verzahnung 15 zwischen der Zahnkopflinie 16' und der Zahnfußlinie 17'. Die jeweilige Zahnfußlinie 17' ist um den Winkel ϕ von der Vertikalebene E weg zum Material des Bordes hin und die Zahnkopflinie 16' um den Winkel δ von der Ebene E und von dem Material weg geneigt. Die Zahnkopflinien 16' und die Zahnfußlinien 17' entfernen sich mit zunehmendem radialen Abstand von P und somit mit zunehmendem radialen Abstand von der Rotationsachse 1 a der Nabe 1 zunehmend weiter voneinander.

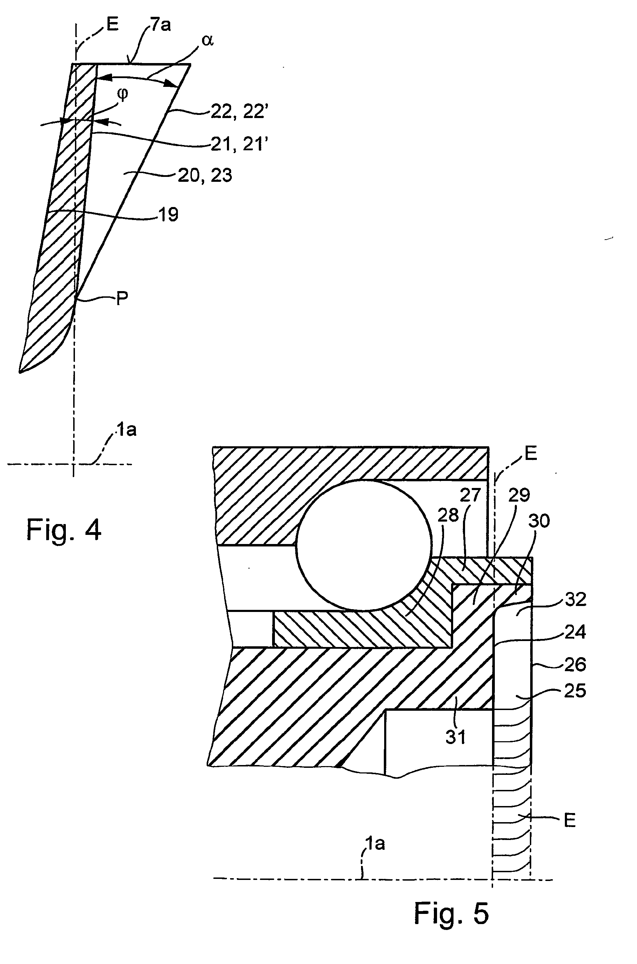

Die Zähne 20 der Verzahnung 23 nach Figur 4 sind radial längs ausgerichtet und umfangsseitig zueinander benachbart. Die vom Zahnfuß 21 entfernte äußerste geometrische Kontur entlang der Kopfes 22 jedes der Zähne 20 ist geometrisch durch Zahnkopflinien 22' beschrieben. Die Zahnfußlinie 21' ist die geometrische Linie am Übergang jedes Zahnes 20 in das Material und markiert gleichzeitig den Scheitel 21 am Grund der Zahnlücke. Am Scheitelpunkt P trifft die jeweilige Zahnkopflinie 22' auf eine Zahnfußlinie 21'.

Die Zahnfußlinien 21' und die Zahnkopflinien 22' schließen einen mit α bezeichneten spitzen Winkel beliebig wählbare Größe zwischen sich ein. Die Zahnfußlinie 21' des jeweiligen Zahnes 20 ist außerdem mit gleichem Richtungssinn wie die Zahnkopflinie 22' um einen spitzen Winkel ϕ von beliebig wählbarer Größe von der Ebene E und vom Material des Bundes weg geneigt. Die Ebene E ist eine gedachte durch den Scheitelpunkt P verlaufenden Vertikalebene E, die senkrecht von der Rotationsachse 1a der Nabe durchstoßen ist. Die Ebene E verläuft in diesem Fall axial zwischen der Stirnfläche 19 eines Innenringes und den Zähnen 20. Die Zahnkopflinien 22' und die Zahnfußlinien 21' entfernen sich mit zunehmenden radialen Abstand von P zunehmend weiter voneinander.

Die Zahnfußlinien 24 der Zähne 32 der Verzahnung 25 nach Figur 5 verlaufen parallel zu den Zahnkopflinien 26 und jeweils parallel zu oder in beliebigen Vertikalebenen E. Radial zwischen der Verzahnung 25 und dem Radialbord 27 des Innenrings 28 ist ein massiver Ringabschnitt 30 aus dem Material gebildet, das beim Formen des Bundes 31 in die Ausbrechung 29 des stirnseitig abgestuften Innenringes 28 gepresst wurde. Der Ringabschnitt 30 umgibt die Verzahnung 25 radial und ist radial von dem Radialbord 27 umgeben.

### Bezugszeichen

- 1: Nabe
- 1a: Rotationsachse
- 2: Innenring
- 3: Bund
- 4: Verzahnung
- 5: Ausbrechung
- 6: Stirnfläche
- 7: Radialbord
- 7a: innenzylindrische Fläche
- 8: Zahn
- 9: Zahnkopf
- 9': Zahnkopflinie
- 10: Zahnfuß
- 10': Zahnfußlinie
- 11: Verzahnung
- 12: Zahn
- 13: Zahnkopf
- 13': Zahnkopflinie
- 14: Zahnfuß
- 14': Zahnfußlinie
- 15: Verzahnung
- 16: Zahnkopf
- 16': Zahnkopflinie
- 17: Zahnfuß
- 17': Zahnfußlinie
- 18: Zahn
- 19: Stirnfläche
- 20: Zahn
- 21: Zahnfuß
- 21': Zahnfußlinie
- 22: Zahnkopf
- 22': Zahnkopflinien
- 23: Verzahnung
- 24: Zahnfußlinie
- 25: Verzahnung
- 26: Zahnkopflinie
- 27: Radialbord
- 28: Innenring
- 29: Ausbrechung
- 30: Ringabschnitt
- 31: Bund
- 32: Zahn

## Patentansprüche

1. Nabe (1) einer Radlagereinheit mit zumindest einem auf der Nabe (1) sitzenden Innenring (2, 28), wobei der Innenring (2, 28) durch einen aus der Nabe (1) umgeformten Bund (3, 31) axial auf der Nabe (1) gehalten ist und dabei der Bund (3, 31) eine Verzahnung (4, 11, 15, 23, 25) aufweist und wobei der Innenring (2, 28) stirnseitig radial innen eine Ausbrechung (5) aufweist und dabei die Ausbrechung (5) mit plastisch verdrängtem Material des Bundes (3, 31) so ausgefüllt ist, dass das Material den Innenring (2, 28) zumindest in der Ausbrechung (5) hintergreift und dass das Material in der Ausbrechung (5) in radialer Richtung von dem Innenring (2, 28) eingefasst ist, **dadurch gekennzeichnet, dass** die Verzahnung (4, 11, 15, 23, 25) zumindest anteilig in dem von dem Innenring (2, 28) radial in der Ausbrechung (5) eingefassten Material ausgebildet ist. (Fig. 1, Fig. 1 a, Fig. 2, Fig. 3, Fig. 4, Fig. 5).

2. Radlagereinheit nach Anspruch 1, **dadurch gekennzeichnet, dass** die Ausbrechung (5) ringnutförmig um die Rotationsachse (1a) der Nabe (1) verläuft. (Fig. 1, Fig. 1 a, Fig. 2, Fig. 3, Fig. 4, Fig. 5).

3. Radlagereinheit nach Anspruch 1, mit radial längs ausgerichteten und umfangsseitig zueinander benachbarten Zähnen (12, 32) an dem Bund (3, 31), **dadurch gekennzeichnet, dass** die Zahnkopflinien (13', 26) der Zähne (12, 32) in einer gemeinsamen gedachten Vertikalebene (E) verlaufen, wobei die Vertikalebene (E) senkrecht von der Rotationsachse (1 a) der Nabe (1) durchstoßen ist. (Fig. 2, Fig. 5).

4. Radlagereinheit nach Anspruch 1, mit einer Stirn- oder Schrägverzahnung (4, 11, 15, 23) aus radial längs ausgerichteten und umfangsseitig zueinander benachbarten Zähnen (8, 12, 18, 20) an dem Bund (3), **dadurch gekennzeichnet, dass** die Zahnfußlinien (10', 14', 17', 21') der Zähne (8, 12, 18, 20) um einen spitzen Winkel zu einer gemeinsamen gedachten Vertikalebene (E) geneigt sind, wobei die Vertikalebene (E) senkrecht von der Rotationsachse (1a) der Nabe (1) durchstoßen ist. (Fig. 1, Fig. 1a, Fig. 2, Fig. 3, Fig. 4).

5. Radlagereinheit nach Anspruch 1, mit einer Stirn- oder Schrägverzahnung (4, 15, 23) aus radial längs ausgerichteten und umfangsseitig zueinander benachbarten Zähnen (8, 18, 20) an dem Bund (3, 31), **dadurch gekennzeichnet, dass** die Zahnkopflinien (9', 16', 22') der Zähne (8, 18, 20) um einen spitzen Winkel zu einer gemeinsamen gedachten Vertikalebene (E) geneigt sind, wobei die Vertikalebene (E) senkrecht von der Rotationsachse (1a) der Nabe (1) durchstoßen ist. (Fig. 1, Fig. 1 a, Fig. 3, Fig. 4).

6. Radlagereinheit nach Anspruch 1, mit einer Stirn- oder Schrägverzahnung (4, 11, 15, 23) aus radial längs ausgerichteten und umfangsseitig zueinander benachbarten Zähnen (8, 12, 18, 20) an dem Bund (3), **dadurch gekennzeichnet, dass** die Zahnfußlinien (10', 14', 17', 21') und die Zahnkopflinien (9', 13', 16', 22') einen spitzen Winkel zwischen sich einschließen, wobei die Zahnkopflinien (9', 13', 16', 22') und die Zahnfußlinien (10', 14', 17', 21') mit zunehmenden radialen Abstand von der Rotationsachse (1a) der Nabe (1) zunehmend weiter voneinander entfernt verlaufen. (Fig. 1, Fig. 1a, Fig. 2, Fig. 3, Fig. 4).

## Claims

1. Hub (1) for a wheel bearing unit having at least one inner ring (2, 28) which is seated on the hub (1), with the inner ring (2, 28) being held axially on the hub (1) by means of a collar (3, 31) which is formed out of the hub (1), and here, the collar (3, 31) having a toothing (4, 11, 15, 23, 25), and with the inner ring (2, 28) having a projection (5) at the end side radially at the inside, and here, the projection (5) being filled with plastically displaced material of the collar (3, 31) in such a way that the material engages behind the inner ring (2, 28) at least in the projection (5), and that the material in the projection (5) is encompassed by the inner ring (2, 28) in the radial direction, **characterized in that** the toothing (4, 11, 15, 23, 25) is formed at least proportionately in the material which is encompassed radially by the inner ring (2, 28) in the projection (5). (Figure 1, figure 1a, figure 2, figure 3, figure 4, figure 5).

2. Wheel bearing unit according to Claim 1, **characterized in that** the projection (5) runs in the shape of an annular groove around the rotational axis (1a) of the hub (1). (Figure 1, figure 1a, figure 2, figure 3, figure 4, figure 5).

3. Wheel bearing unit according to Claim 1, having radially longitudinally aligned teeth (12, 32), which are adjacent to one another at the peripheral side, on the collar (3, 31), **characterized in that** the tooth tip lines (13', 26) of the teeth (12, 32) run in a common imaginary vertical plane (E), with the vertical plane (E) being penetrated perpendicularly by the rotational axis (1a) of the hub (1). (Figure 2, figure 5).

4. Wheel bearing unit according to Claim 1, having a spur toothing or helical toothing (4, 11, 15, 23) composed of radially longitudinally aligned teeth (8, 12, 18, 20), which are adjacent to one another at the peripheral side, on the collar (3), **characterized in that** the tooth root lines (10', 14', 17', 21') of the teeth (8, 12, 18, 20) are inclined at an acute angle with respect to a common imaginary vertical plane (E), with the vertical plane (E) being penetrated perpendicularly by the rotational axis (1a) of the hub (1). (Figure 1, figure 1a, figure 2, figure 3, figure 4).

5. Wheel bearing unit according to Claim 1, having a spur toothing or helical toothing (4, 15, 23) composed of radially longitudinally aligned teeth (8, 18, 20), which are adjacent to one another at the peripheral side, on the collar (3, 31), **characterized in that** the tooth tip lines (9', 16', 22') of the teeth (8, 18, 20) are inclined at an acute angle with respect to a common imaginary vertical plane (E), with the vertical plane (E) being penetrated perpendicularly by the rotational axis (1a) of the hub (1). (Figure 1, figure 1a, figure 3, figure 4).

6. Wheel bearing unit according to Claim 1, having a spur toothing or helical toothing (4, 11, 15, 23) composed of radially longitudinally aligned teeth (8, 12, 18, 20), which are adjacent to one another at the peripheral side, on the collar (3), **characterized in that** the tooth root lines (10', 14', 17', 21') and the tooth tip lines (9', 13', 16', 22') enclose an acute angle between one another, with the tooth tip lines (9', 13', 16', 22') and the tooth root lines (10', 14', 17', 21') running increasingly further apart from one another with increasing radial distance from the rotational axis (1a) of the hub (1). (Figure 1, figure 1a, figure 2, figure 3, figure 4).

## Revendications

1. Moyeu (1) d'une unité de palier de roue, comprenant au moins une bague interne (2, 28) reposant sur le moyeu (1), la bague interne (2, 28) étant maintenue axialement sur le moyeu (1) par un épaulement (3, 31) façonné dans le moyeu (1) et en l'occurrence l'épaulement (3, 31) présentant une denture (4, 11, 15, 23, 25) et la bague interne (2, 28) présentant du côté frontal, radialement à l'intérieur, une percée (5), la percée (5) étant remplie de matériau repoussé plastiquement de l'épaulement (3, 31), de telle sorte que le matériau vienne en prise par l'arrière avec la bague interne (2, 28) au moins dans la percée (5) et que le matériau dans la percée (5) soit encadré par la bague interne (2, 28) dans la direction radiale, **caractérisé en ce que** la denture (4, 11, 15, 23, 25) est réalisée au moins en partie dans le matériau encadré radialement dans la percée (5) par la bague interne (2, 28). (Figures 1, 1a, 2, 3, 4 et 5).

2. Unité de palier de roue selon la revendication 1, **caractérisée en ce que** la percée (5) s'étend en forme de rainure annulaire autour de l'axe de rotation (1a) du moyeu (1). (Figures 1, 1a, 2, 3, 4, 5).

3. Unité de palier de roue selon la revendication 1, comprenant des dents (12, 32) orientées radialement longitudinalement et adjacentes les unes aux autres du côté périphérique, sur l'épaulement (3, 31), **caractérisée en ce que** les lignes de tête (13', 26) des dents (12, 32) s'étendent dans un plan vertical (E) imaginaire et commun, le plan vertical (E) étant traversé perpendiculairement par l'axe de rotation (1a) du moyeu (1). (Figures 2, 5).

4. Unité de palier de roue selon la revendication 1, comprenant une denture frontale ou oblique (4, 11, 15, 23) constituée de dents (8, 12, 18, 20) sur l'épaulement (3), orientées longitudinalement radialement et adjacentes les unes aux autres du côté périphérique, **caractérisée en ce que** les lignes des bases (10', 14', 17', 21') des dents (8, 12, 18, 20) sont inclinées suivant un angle aigu par rapport à un plan vertical imaginaire commun (E), le plan vertical (E) étant traversé perpendiculairement par l'axe de rotation (1a) du moyeu (1). (Figures 1, 1a, 2, 3, 4).

5. Unité de palier de roue selon la revendication 1, comprenant une denture frontale ou oblique (4, 15, 23) constituée de dents (8, 18, 20) sur l'épaulement (3, 31), orientées longitudinalement radialement et adjacentes les unes aux autres du côté périphérique, **caractérisée en ce que** les lignes des bases (9', 16', 22') des dents (8, 18, 20) sont inclinées suivant un angle aigu par rapport à un plan vertical imaginaire commun (E), le plan vertical (E) étant traversé perpendiculairement par l'axe de rotation (1a) du moyeu (1). (Figures 1, 1a, 3, 4).

6. Unité de palier de roue selon la revendication 1, comprenant une denture frontale ou oblique (4, 11, 15, 23) constituée de dents (8, 12, 18, 20) sur l'épaulement (3), orientées longitudinalement radialement et adjacentes les unes aux autres du côté périphérique,- **caractérisée en ce que** les lignes des bases des dents (10', 14', 17', 21') et les lignes des bases des dents (9', 13', 16', 22') forment entre elles un angle aigu, les lignes des bases des dents (9', 13', 16', 22') et les lignes des bases des dents (10', 14', 17', 21') s'étendant avec une distance radiale croissante de l'axe de rotation (1a) du moyeu (1) en s'écartant de plus en plus les unes des autres. (Figures 1, 1a, 2, 3, 4).
